# EUROPEAN PATENT SPECIFICATION

(11) **EP 0 352 714 B1**
(45) Date of publication and mention of the grant of the patent: **11.10.1995**
(21) Application number: 89113630.1
(22) Date of filing: 24.07.1989
(51) Int. Cl.: C08K 5/02, C08K 3/20, H01B 3/44, C08L 51/00

(54) **Flame retardant resin composition and flame retardant insulated cable**
Flammhemmende Harzzusammensetzung und Kabel mit flammhemmender Isolierung
Composition de résine retardant la flamme et câble électrique ayant un isolant retardateur de flamme

(30) Priority: 25.07.1988 JP 183529/88; 06.08.1988 JP 196311/88
(43) Date of publication of application: 31.01.1990
(73) Proprietor: SUMITOMO ELECTRIC INDUSTRIES, LTD., Osaka-shi, Osaka 541 (JP)
(72) Inventor: Torisu, Shinji c/o Osaka Works of Sumitomo, Konohana-ku Osaka (JP)
(74) Representative: Grünecker, Kinkeldey, Stockmair & Schwanhäusser Anwaltssozietät

(56) References cited:
- WPIL, FILE SUPPLIER, Derwent Publications Ltd., AN:86.247672 & JP-A-61155414
- Database Chemical Abstracts, (Host STN), 1974, ref no 83(24): 194423X Columbus Ohio, US; & JP-A-49116147

## Description

The present invention relates to a flame retardant resin composition, and particularly to sheath materials to flame-retard a high voltage cable, for example, that used for high voltage circuits in electron guns of the cathode ray tube of television receivers. The present invention also relates to a flame retardant insulated cable using the flame retardant resin composition.

Various attempts have been made to manufacture a high voltage cable, for example, that used for high voltage circuits in electron guns of cathode ray tubes of television receivers, including a method in which an insulator mainly made of polyethylene is applied on a wire, followed by applying on the insulator a flame retardant material to protect the inner polyethylene. Such a method is, for example, disclosed in JP-B-51-8465 (The term "JP-B" as used herein means an "examined Japanese patent publication").

According to JP-B-51-8465, a polyethylene having a high softening point of 105°C or more is used as an insulator, the softening point corresponding to the temperature of 105°C stipulated in Subject 758 of United States UL standard. The polyethylene of the publication is applied on a wire, followed by applying on the polyethylene a flame retardant sheath material comprising as a main component a graft copolymer prepared by graft copolymerizing an ethylene/vinyl acetate copolymer with vinyl chloride, thereby obtaining a wire having tracking resistance, high tension cut-through characteristics, and high resistance to deformation, together with the use of the polyethylene insulator of the high softening point.

JP-B-52-41786 shows further improvement in such flame retardant sheath materials. In this publication, (1) an inorganic flame retarder comprising at least one of oxides or sulfides of antimony, arsenic or tin; (2) an organic flame retarder comprising a halogen-containing compound having molecular weight of 200 to 1,500; and (3) an inorganic filler for sintering are further added to the above graft copolymer, thereby improving flameproofness relative to the flame retardant sheath materials containing only the above graft copolymer.

There have been known a number of techniques to provide such flame retardant sheath materials.

For example: (1) JP-B-53-47148 shows that a graft copolymer of a chlorinated polyethylene and vinyl chloride are crosslinked by means of radicals or high energy radiation. (2) JP-B-54-14611 shows that a chlorinated polyethylene is mixed with a graft copolymer prepared by grafting vinyl chloride on to an ethylene/vinyl ester copolymer. (3) JP-B-54-14612 shows that antimony trioxide is mixed with the above mixture of the JP-B-54-14611. (4) JP-B-54-15057 shows that a chlorinated polyethylene is added to a graft copolymer of a chlorinated polyethylene and vinyl chloride. (5) JP-B-54-15058 shows that an ethylene copolymer is added to a graft copolymer of a chlorinated polyethylene and vinyl chloride. (6) JP-B-56-41654 shows that a metal borate and calcium carbonate are mixed with a graft copolymer prepared by grafting vinyl chloride on to an ethylene vinyl ester copolymer. (7) JP-B-56-41655 shows that a hydrated alumina is added to the above mixture of the JP-B-56-41654. (8) JP-B-61-34746 shows that a chlorinated polyethylene is mixed with a zinc compound, and oxides or sulfides of antimony, zircon or molybdenum.

However, as mentioned in these publications, with conventional flame retardant sheath materials, a flame retardant property precedes the other properties, and electrical properties, are compensated for by selecting insulating materials such as polyethylenes. In these inventions, no special regard is paid to electrical properties, as affected by sheath materials.

JP-A-61-155414 discloses a resin composition suitable as a sheath material for flame-retardant cables, the composition comprises a graft polymer obtained by polymerizing vinyl chloride or a momomer mixture consisting mainly of vinyl chloride in the presence of a copolymer of ethylene/methacrylic ester. Further, the composition comprises a flame-retardant.

On the other hand, as electronic equipment has increased in size and function, the electrical properties of sheath materials, particularly under high temperature, have not been negligible. As a practical matter, it is very important that sheath materials maintain their insulating performance in an atmosphere of 60°C or more.

An object of the present invention is to overcome the above-noted problems inherent in the prior art so as to provide a flame retardant resin composition that, in addition to a high flame retardant property, provides improved electrical properties at room temperature or more, and can be used to produce a flame retardant insulated wire.

Other objects and effects of the present invention will be apparent from the following description.

The present invention relates to a flame retardant resin composition comprising a resin material containing as a main component
(A) a graft copolymer prepared by graft copolymerizing an ethylene/methyl methacrylate copolymer, ethylene/ethyl methacrylate copolymer or ethylene/propyl methacrylate copolymer with vinyl chloride; and
(B) at least one member selected from the group consisting of
   (i) an organic flame retarder,
   (ii) an inorganic flame retarder, and
   (iii) an inorganic filler;
   **characterized in that** said resin material further comprises
(C) a sterically hindered amine light stabilizer in an amount of from 0.5 to 5 parts by weight per 100 parts by weight of the graft copolymer.

The present invention also relates to a flame retardant insulated cable comprising:
(a) a conductor;
(b) an insulator comprising polyethylene having a high softening point covering said conductor; and
(c) a flame retardant resin composition as specified above.

The proportion of each of the components which constitute the graft copolymer can be optionally selected depending on the usage. Generally, the ethylene content of the ethylene/methyl methacrylate copolymer, ethylene/ethyl methacrylate copolymer or ethylene/propyl methacrylate copolymer is from 40 to 95 wt%; and the methyl methacrylate content of said ethylene/methyl methacrylate copolymer, the ethyl methacrylate content of said ethylene/ethyl methacrylate copolymer or the propyl methacrylate content of said ethylene/propyl methacrylate copolymer is from 5 to 60 wt%.

Preferably, the ethylene content of the ethylene/methyl methacrylate copolymer, ethylene/ethyl methacrylate copolymer or ethylene/propyl methacrylate copolymer is from 50 to 90 wt%; and the methyl methacrylate content of said ethylene/methyl methacrylate copolymer, the ethyl methacrylate content of said ethylene/ethyl methacrylate copolymer or the propyl methacrylate content of said ethylene/propyl methacrylate copolymer is from 10 to 50 wt%.

The content of the vinyl chloride to be graft copolymerized is 20 to 80 wt%, preferably 30 to 60 wt%.

Of the above methacrylates, methyl methacrylate is preferred.

The graft copolymer may be used alone, or in combination with other resins that are compatible with it.

In the present invention, when a compatible resin such as a polyethylene, a polypropylene, a polyvinyl alcohol, a vinyl chloride resin, or a chlorinated polyethylene is mixed with the graft copolymer, mechanical strength as well as flexibility can be controlled, and flame retardant properties as well as foaming expansion increase.

It is preferred that the graft copolymer is high in polymerization degree, for example, 1,000 to 5,000, more preferably from 1,000 to 2,000, from the standpoint of mechanical strength.

The graft copolymer used in the present invention can be prepared by known methods as described, e.g., in JP-A-61-155414 (The term "JP-A" as used herein means an "unexamined published Japanese patent application").

When the graft copolymer is singly used, or it is only mixed with a compatible resin (i.e., the organic or inorganic flame retarder or the inorganic filler is not used), flame retardant properties are insufficient, and it is difficult to keep foaming expansion. Accordingly, it is liable to cause flame spread and catch fire.

These deficiencies are overcome in the present invention, by adding at least one member selected from the group consisting of an organic flame retarder, an inorganic flame retarder, and an inorganic filler to the graft copolymer.

Examples of the organic flame retarder include a halogen-containing organic compound and a phosphorus-containing organic compound. Typical examples of the halogen-containing organic compound include tetrabromobutane, perchloropentacyclodecane, tetrabromobisphenol A, chlorinated paraffin, bromotriphenylphosphate, decabromobiphenyl, decabromodiphenyl oxide, and bromoepoxide. Particularly preferred is an aromatic halogen compound, such as decabromobiphenyl and decabromodiphenyl oxide, from the standpoint of high temperature resistance.

Typical examples of an inorganic flame retarder include oxides or sulfides of antimony, arsenic, or tin. Particularly preferred is antimony trioxide.

In order to maintain flame retardant properties, it is desirable to mix the graft copolymer with an inorganic filler. Typical examples of such an inorganic filler include asbestos, talc, clay, mica, zinc borate, aluminum hydroxide, calcium carbonate, barium sulfate, magnesium oxide. Particularly preferred are talc, clay, and zinc borate.

In the present invention, an organic flame retarder, an inorganic flame retarder, and an inorganic filler can be added, singly or in combination in a suitable amount, to the graft copolymer so that the electric properties of the graft copolymer room temperature or more, particularly, at 60°C are improved in addition to high flame retardant properties.

The amounts of the above components, i.e., the organic flame retarder, the inorganic flame retarder and the inorganic filler, may be widely varied according to the aim and use. Although the amounts of the above components can easily be determined by one skilled in the art according to the aim and use, the amount of the organic flame retarder is preferably from 10 to 50 parts by weight, more preferably from 15 to 40 parts by weight, based on 100 parts by weight of the graft copolymer; the amount of the inorganic flame retarder is preferably from 1 to 30 parts by weight, more preferably from 5 to 25 parts by weight, based on 100 parts by weight of the graft copolymer; and the amount of the inorganic filler is preferably from 5 to 50 parts by weight, more preferably from 5 to 25 parts by weight, based on 100 parts by weight of the graft copolymer.

Various additives may also be added to the composition of the present invention, if desired. Specifically, examples of such additives include thermal stabilizers, crosslinking agents (including a peroxide), other fillers, foaming agents, lubricants, dyes and pigments.

A sterically hindered amine light stabilizer (which is hereinafter referred to as "HALS") is further mixed with the flame retardant resin composition of the present invention.

The amount of HALS is from 0.5 to 5 parts by weight, preferably from 1 to 3 parts by weight, based on 100 parts by weight of the graft copolymer. If the amount of HALS is less than 0.5 parts by weight, it has little effect on electric properties. The upper limit of 5 parts by weight is set from the standpoint of cost.

The flame retardant resin composition of the present invention can be manufactured using a single screw extruder, a multiple screw extruder, Banbury mixer, a roller mill, a kneading machine, a high speed fluid agitator of Henschel mixer type, or any apparatus, that will cause each component to be mixed at a temperature over the melting point of thermoplastic resins.

The composition of the present invention is advantageously used in a cover for an electric cable (particularly as a sheath material). Further, it is applicable to products which require flame retardant properties, such as injection molded articles, tubes, extruded articles, compression molded articles, calendered articles, stretched articles, and foamed articles.

The flame retardant insulated cable of the present invention may be manufactured as follows:
A conductor, such as copper, is covered with an insulator, such as a polyethylene having a high softening point, to a suitable thickness. The insulator is preferably a flame-retarded insulator, for example, those mixed with a chlorinated polyethylene or a flame retarder. The insulator, if necessary, may be crosslinked. Subsequently, the flame retardant resin composition of the present invention is applied on the insulator. The composition of the present invention may be crosslinked by means of ionizing radiation if desired.

Examples of polyethylene having a high softening point for use as the insulator include a moderate-pressure polyethylene, a low-pressure polyethylene, or a high-density polyethylene, each having a softening point of 105°C or more. It is preferred that these polyethylenes be crosslinked by means of high energy radiation.

The application of a polyethylene having a high softening point as an insulator on a conductor together with the composition of the present invention as a sheath material provides a flame retardant insulated cable that is extremely improved in electrical properties at room temperature or more.

A typical example of conventional flame retardant resin compositions acting as sheath materials is disclosed in JP-B-52-41786 in which a graft copolymer prepared by graft copolymerizing an ethylene/vinyl acetate copolymer with vinyl chloride is mixed with flame retarders and inorganic fillers. An electrical property of this conventional composition, which is typical as common insulating materials, is that the volume resistance decreases with an increase in temperature, and becomes lower than 10¹¹ Ωcm, which corresponds to the critical value of an insulator in an atmosphere of high temperature.

The reason why the use of the graft copolymer of the present invention maintains insulating properties even in an atmosphere of high temperature is not yet theoretically understood. However, this result is particularly surprising and thereby provides a high flame retardant sheath material capable of maintaining insulating properties even in an atmosphere of high temperature.

As discussed above, the graft copolymer per se used in the present invention is not high in flame retardant properties. Therefore, it is necessary to mix the graft copolymer with flame retarders and/or inorganic fillers, as taught by the present invention.

The present invention is described in greater detail with reference to the following example and comparative example.

### COMPARATIVE EXAMPLE

Flame retardant resin compositions A, B and C having components and weight ratios shown in Table 1 were prepared by the use of a 6 inch open roll mill and then pressed at 150°C to produce 1 mm-thick sheets. These sheets were irradiated by electron rays at 10 Mrad to crosslink the polymer.

The volume resistivities of the sheets as a function of temperature was determined. Table 2 shows the results.

Compositions X and Y were produced in the same manner as in the above procedures except that the kinds of components were varied as shown in Table 1. The change in the volume resistivities as a function of temperature of the compositions X and Y was also determined. Table 2 also shows the results.

In the Comparative Example, the graft copolymers used are as follows:
Graft copolymer 1: ethylene/methyl methacrylate copolymer (the content of vinyl chloride grafted is 50 wt%, the methyl methacrylate content is 38 wt% and the polymerization degree is 1,030).
Graft copolymer 2: ethylene/methyl methacrylate copolymer (the content of vinyl chloride grafted is 45 wt%, the methyl methacrylate content is 38 wt% and the polymerization degree is 1,480).
Graft copolymer 3: ethylene/methyl methacrylate copolymer (the content of vinyl chloride grafted is 40 wt%, the methyl methacrylate content is 38 wt% and the polymerization degree is 1,230).
Graft copolymer 4: graft copolymer prepared by graft copolymerizing an ethylene/vinyl acetate copolymer with vinyl chloride (Sumigraft GF manufactured by Sumitomo Chemical Co., Ltd.).

**Table 1**

| Component | Composition | | | | |
|---|---|---|---|---|---|
| | A | B | C | X | Y |
| Graft copolymer 1 | 100 | - | - | - | - |
| Graft copolymer 2 | - | 100 | - | - | - |
| Graft copolymer 3 | - | - | 100 | - | - |
| Graft copolymer 4 | - | - | - | 100 | 100 |
| Tribasic lead sulfate | 10 | 10 | - | 10 | - |
| Dibasic lead sulfate | - | - | 10 | - | 10 |
| Stearic acid | 1 | 1 | 1 | 1 | 1 |
| Antimony trioxide | 10 | 10 | 10 | 10 | 10 |
| Zinc borate | 10 | 10 | 10 | 10 | 10 |
| Decabromodiphenyloxide | 20 | 20 | 20 | 20 | 20 |
| Clay | - | - | 20 | 20 | - |
| Talc | 20 | 20 | - | - | 20 |
| Anti-oxidizing agent¹⁾ | 1 | 1 | 1 | 1 | 1 |

| | | | | | |
|---|---|---|---|---|---|
| Note: 1) 4,4'-thiobis-(6-tert-butyl-3-methylphenol) | | | | | |

**Table 2**

| Volume resistivity (Ωcm) | | | | | |
|---|---|---|---|---|---|
| Measurement temperature (°C) | Composition | | | | |
| | A | B | C | X | Y |
| Room temperature | 1.7x10¹³ | 3.7x10¹³ | 6.1x10¹³ | 5.6x10¹² | 7.5x10¹² |
| 40 | 1.1x10¹³ | 3.6x10¹² | 2.4x10¹³ | 1.8x10¹² | 1.6x10¹² |
| 60 | 2.3x10¹² | 8.4x10¹¹ | 5.5x10¹² | 2.7x10¹¹ | 3.3x10¹¹ |
| 80 | 1.1x10¹¹ | 1.3x10¹¹ | 2.4x10¹¹ | 3.9x10¹⁰ | 3.5x10¹⁰ |

### EXAMPLE 2

Flame retardant resin compositions D and E according to the present invention having components and weight ratios shown in Table 3 were mixed by the use of a 6 inch open roll mill and then pressed at 150°C to produce 1 mm-thick sheets. These sheets were irradiated by electron rays at 10 Mrad to crosslink the polymer.

The volume resistivities of the sheets as a function of temperature was determined. Table 4 shows the results.

Comparative composition Z was produced in the same manner as in the above procedures except that the kinds of components were varied as shown in Table 3. The change in the volume resistivity as a function of temperature of the comparative composition was also determined. Table 4 shows the results.

In the Example, the graft copolymers 2 and 4 are the same as used in the Comparative Example. Graft copolymer 5 is as follows:
Graft copolymer 5: ethylene/methyl methacrylate copolymer (the content of vinyl chloride grafted is 40 wt%, and the polymerization degree is 1,370).

**Table 3**

| Component | Composition | | |
|---|---|---|---|
| | D | E | Z |
| Graft copolymer 2 | 100 | - | - |
| Graft copolymer 5 | - | 100 | - |
| Graft copolymer 4 | - | - | 100 |
| Dibasic lead phosphite | 10 | 10 | 10 |
| Stearic acid | 1 | 1 | 1 |
| Antimony tioxide | 10 | 10 | 10 |
| Zinc borate | 10 | 10 | 10 |
| Decabromodiphenyloxide | 20 | 20 | 20 |
| Talc | 20 | 20 | 20 |
| Anti-oxidizing agent¹⁾ | 1 | 1 | 1 |
| HALS²⁾ | 2 | 2 | - |

| | | | |
|---|---|---|---|
| Note: 1) 4,4'-thiobis-(6-tert-butyl-3-methylphenol) | | | |
| 2) poly((6-(1,1,3,3-tetramethylbutyl)imimo-1,3,5-triazine-2,4-dyl)((2,2,6,6-tetramethyl-4-piperidyl)imino)- hexamethylene((2,2,6,6-tetramethyl-4- piperidyl)imino)) | | | |

**Table 4**

| Volume resistance (Ωcm) | | | |
|---|---|---|---|
| Measurement temperature (°C) | Composition | | |
| | D | E | Z |
| Room temperature | 4.9x10¹⁴ | 6.2x10¹⁴ | 7.5x10¹² |
| 40 | 1.3x10¹⁴ | 4.2x10¹⁴ | 1.6x10¹² |
| 60 | 7.9x10¹² | 2.6x10¹³ | 3.3x10¹¹ |
| 80 | 3.5x10¹¹ | 6.9x10¹¹ | 3.5x10¹⁰ |

It can be understood from the results shown in Tables 2 and 4 that the flame retardant resin composition of the present invention has, in addition to a high flame retardant property, excellent electrical properties at room temperature or higher.

As mentioned above, since the flame retardant resin composition of the present invention maintains insulating properties even in an atmosphere of high temperature, it can be used for sheath materials that are applied to a high voltage wire, a shielding wire, or a coaxial cable; these wires being used, for example, in the high voltage circuits of an electron gun in television cathode ray tube, thereby maintaining excellent electrical properties.

Further, the combination of a polyethylene of high softening point acting as an insulator and the above sheath materials provides a flame retardant insulated cable having excellent electric properties at room temperature or more.

## Claims

1. A flame retardant resin composition comprising a resin material containing as a main component
(A) a graft copolymer prepared by graft copolymerizing an ethylene/methyl methacrylate copolymer, ethylene/ethyl methacrylate copolymer or ethylene/propyl methacrylate copolymer with vinyl chloride; and
(B) at least one member selected from the group consisting of
(i) an organic flame retarder,
(ii) an inorganic flame retarder, and
(iii) an inorganic filler;
**characterized in that** said resin material further comprises
(C) a sterically hindered amine light stabilizer in an amount of from 0.5 to 5 parts by weight per 100 parts by weight of the graft copolymer.

2. A flame retardant resin composition as claimed in claim 1, wherein the ethylene content of said ethylene/methyl methacrylate copolymer, ethylene/ethyl methacrylate copolymer or ethylene/propyl methacrylate copolymer is from 40 to 95 wt%; and the methyl methacrylate content of said ethylene/methyl methacrylate copolymer, the ethyl methacrylate content of said ethylene/ethyl ethyl methacrylate copolymer or the propyl methacrylate content of said ethylene/propyl methacrylate copolymer is from 5 to 60 wt%.

3. A flame retardant resin composition as claimed in claim 2, wherein the ethylene content of said ethylene/methyl methacrylate copolymer, ethylene/ethyl methacrylate copolymer or ethylene/propyl methacrylate copolymer is from 50 to 90 wt%; and the methyl methacrylate content of said ethylene/methyl methacrylate copolymer, the ethyl methacrylate content of said ethylene/ethyl methacrylate copolymer or the propyl methacrylate content of said ethylene/propyl methacrylate copolymer is from 10 to 50 wt%.

4. A flame retardant resin composition as claimed in claim 1, wherein said organic flame retarder is tetrabromobutane, perchloropentacyclodecane, tetrabromobisphenol A, chlorinated paraffin, bromotriphenylphosphate, decabromobiphenyl, decabromodiphenyl oxide, or bromoepoxide.

5. A flame retardant resin composition as claimed in claim 1, wherein said inorganic flame retarder is an oxide of antimony, arsenic or tin; or a sulfide of antimony, arsenic or tin.

6. A flame retardant resin composition as claimed in claim 5, wherein said inorganic flame retarder is antimony trioxide.

7. A flame retardant resin composition as claimed in claim 1, wherein said inorganic filler is asbestos, talc, clay, mica, zinc borate, aluminum hydroxide, calcium carbonate, barium sulfate or magnesium oxide.

8. A flame retardant resin composition as claimed in claim 1, wherein the amount of said organic flame retarder is from 10 to 50 parts by weight; the amount of said inorganic flame retarder is from 1 to 30 parts by weight; and the amount of said inorganic filler is from 5 to 50 parts by weight, all based on 100 parts by weight of said graft copolymer.

9. A flame retardant resin composition as claimed in claim 8, wherein the amount of said organic flame retarder is from 15 to 40 parts by weight; the amount of said inorganic flame retarder is from 5 to 25 parts by weight; and the amount of said inorganic filler is from 5 to 25 parts by weight, all based on 100 parts by weight of said graft copolymer.

10. A flame retardant insulated cable comprising:
(a) a conductor;
(b) an insulator comprising polyethylene having a high softening point covering said conductor; and
(c) a flame retardant resin composition as claimed in any of the preceding claims.

## Patentansprüche

1. Flammenhemmende Harzzusammensetzung, die ein Harzmaterial umfaßt, das als Hauptbestandteile enthält:
(A) ein Pfropfcopolymer, hergestellt durch Pfropfcopolymerisieren eines Ethylen/Methylmethacrylat-Copolymers, Ethylen/Ethylmethacrylat-Copolymers oder Ethylen/Propylmethacrylat-Copolymers mit Vinylchlorid, und
(B) mindestens einen Bestandteil, ausgewählt aus der Gruppe, bestehend aus
(i) einem organischen Flammschutzmittel,
(ii) einem anorganischen Flammschutzmittel und
(iii) einem anorganischen Füllstoff,
dadurch gekennzeichnet, daß das Harzmaterial weiterhin (C) einen Lichtstabilisator auf der Basis eines sterisch gehinderten Amins in einer Menge im Bereich von 0,5 bis 5 Gewichtsteilen pro 100 Gewichtsteilen des Pfropfcopolymers umfaßt.

2. Flammenhemmende Harzzusammensetzung nach Anspruch 1, worin der Ethylengehalt des Ethylen/Methylmethacrylat-Copolymers, Ethylen/Ethylmethacrylat-Copolymers oder Ethylen/Propylmethacrylat-Copolymers im Bereich von 40 bis 95 Gew.-% liegt und der Methylmethacrylatgehalt des Ethylen/Methylmethacrylat-Copolymers, der Ethylmethacrylatgehalt des Ethylen/Ethylmethacrylat-Copolymers oder der Propylmethacrylatgehalt des Ethylen/Propylmethacrylat-Copolymers im Bereich von 5 bis 60 Gew.-% liegt.

3. Flammenhemmende Harzzusammensetzung nach Anspruch 2, worin der Ethylengehalt des Ethylen/Methylmethacrylat-Copolymers, Ethylen/Ethylmethacrylat-Copolymers oder Ethylen/Propylmethacrylat-Copolymers im Bereich von 50 bis 90 Gew.-% liegt und der Methylmethacrylatgehalt des Ethylen/Methylmethacrylat-Copolymers, der Ethylmethacrylatgehalt des Ethylen/Ethylmethacrylat-Copolymers oder der Propylmethacrylatgehalt des Ethylen/Propylmethacrylat-Copolymers im Bereich von 10 bis 50 Gew.-% liegt.

4. Flammenhemmende Harzzusammensetzung nach Anspruch 1, worin das organische Flammschutzmittel Tetrabrombutan, Perchlorpentacyclodecan, Tetrabrombisphenol A, chloriertes Paraffin, Bromtriphenylphosphat, Decabrombiphenyl, Decabromdiphenyloxid oder Bromepoxid ist.

5. Flammenhemmende Harzzusammensetzung nach Anspruch 1, worin das anorganische Flammschutzmittel ein Oxid von Antimon, Arsen oder Zinn, oder ein Sulfid von Antimon, Arsen oder Zinn ist.

6. Flammenhemmende Harzzusammensetzung nach Anspruch 5, worin das anorganische Flammschutzmittel Antimontrioxid ist.

7. Flammenhemmende Harzzusammensetzung nach Anspruch 1, worin der anorganische Füllstoff Asbest, Talk, Ton, Glimmer, Zinkborat, Aluminiumhydroxid, Calciumcarbonat, Bariumsulfat oder Magnesiumoxid ist.

8. Flammenhemmende Harzzusammensetzung nach Anspruch 1, worin die Menge des organischen Flammschutzmittels im Bereich von 10 bis 50 Gewichtsteilen liegt, die Menge des anorganischen Flammschutzmittels im Bereich von 1 bis 30 Gewichtsteilen liegt und die Menge des anorganischen Füllstoffs im Bereich von 5 bis 50 Gewichtsteilen liegt, wobei alle Angaben auf 100 Gewichtsteile des Pfropfcopolymers bezogen sind.

9. Flammenhemmende Harzzusammensetzung nach Anspruch 8, worin die Menge des organischen Flammschutzmittels im Bereich von 15 bis 40 Gewichtsteilen liegt, die Menge des anorganischen Flammschutzmittels im Bereich von 5 bis 25 Gewichtsteilen liegt und die Menge des anorganischen Füllstoffs im Bereich von 5 bis 25 Gewichtsteilen liegt, wobei alle Angaben auf 100 Gewichtsteile des Pfropfcopolymers bezogen sind.

10. Flammenhemmendes isoliertes Kabel, umfassend:
(a) einen Leiter,
(b) einen Isolator, der Polyethylen mit einem hohen Erweichungspunkt umfaßt und der den Leiter bedeckt, und
(c) eine flammenhemmende Harzzusammensetzung nach einem der vorhergehenden Ansprüche.

## Revendications

1. Composition ignifuge de résine comprenant un produit de type résine contenant comme composant principal :
(A) un copolymère greffé préparé par copolymérisation par greffage d'un copolymère d'éthylène/méthacrylate de méthyle, d'un copolymère d'éthylène/méthacrylate d'éthyle ou d'un copolymère d'éthylène/méthacrylate de propyle avec du chlorure de vinyle et
(B) au moins un élément choisi dans le groupe constitué
(i) d'un ignifugeant organique,
(ii) d'un ignifugeant inorganique et
(iii) d'une charge inorganique,
caractérisé en ce que ledit produit de type résine comprend de plus
(C) un stabiliant à la lumière de type amine à encombrement stérique à raison de 0,5 à 5 parties en masse pour 100 parties en masse du copolymère greffé.

2. Composition ignifuge de résine selon la revendication 1, dans laquelle la teneur en éthylène dudit copolymère d'éthylène/méthacrylate de méthyle, dudit copolymère d'éthylène/méthacrylate d'éthyle ou dudit copolymère d'éthylène/méthacrylate de propyle est comprise entre 40 et 95% en masse et la teneur en méthacrylate de méthyle dudit copolymère d'éthylène/méthacrylate de méthyle, la teneur en méthacrylate d'éthyle dudit copolymère d'éthylène/méthacrylate d'éthyle ou la teneur en méthacrylate de propyle dudit copolymère d'éthylène/méthacrylate de propyle est comprise entre 5 à 60% en masse.

3. Composition ignifuge de résine selon la revendication 2, dans laquelle la teneur en éthylène dudit copolymère d'éthylène/méthacrylate de méthyle, dudit copolymère d'éthylène/méthacrylate d'éthyle ou dudit copolymère d'éthylène/méthacrylate de propyle est comprise entre 50 et 90% en masse et la teneur en méthacrylate de méthyle dudit copolymère d'éthylène/méthacrylate de méthyle, la teneur en méthacrylate d'éthyle dudit copolymère d'éthylène/méthacrylate d'éthyle ou la teneur en méthacrylate de propyle dudit copolymère d'éthylène/méthacrylate de propyle est comprise entre 10 à 50% en masse.

4. Composition ignifuge de résine selon la revendication 1, dans laquelle ledit ignifugeant organique est le tétrabromobutane, le perchloropentacyclodécane, le tétrabromobisphénol A, la paraffine chlorée, le bromotriphénylphosphate, le décabromobiphényle, l'oxyde de décabromodiphényle ou le bromoépoxyde.

5. Composition ignifuge de résine selon la revendication 1, dans laquelle ledit ignifugeant inorganique est un oxyde d'antimoine, d'arsenic ou d'étain ou un sulfure d'antimoine, d'arsenic ou d'étain.

6. Composition ignifuge de résine selon la revendication 5, dans laquelle ledit ignifugeant inorganique est le trioxyde d'antimoine.

7. Composition ignifuge de résine selon la revendication 1, dans laquelle ladite charge inorganique est l'amiante, le talc, l'argile, le mica, le borate de zinc, l'hydroxyde d'aluminium, le carbonate de calcium, le sulfate de baryum ou l'oxyde de magnésium.

8. Composition ignifuge de résine selon la revendication 1, dans laquelle la quantité dudit ignifugeant organique est comprise entre 10 et 50 parties en masse, la quantité dudit ignifugeant inorganique est comprise entre 1 et 30 parties en masse et la quantité de ladite charge inorganique est comprise entre 5 et 50 parties en masse, toutes les quantités étant par rapport à 100 parties en masse dudit copolymère greffé.

9. Composition ignifuge de résine selon la revendication 8, dans laquelle la quantité dudit ignifugeant organique est comprise entre 15 et 40 parties en masse, la quantité dudit ignifugeant inorganique est comprise entre 5 et 25 parties en masse et la quantité de ladite charge inorganique est comprise entre 5 et 25 parties en masse, toutes les quantités étant par rapport à 100 parties en masse dudit copolymère greffé.

10. Câble isolé ignifuge comprenant:
(a) un conducteur,
(b) un isolant comprenant du polyéthylène ayant une température de déformation élevée, enrobant ledit conducteur, et
(c) une composition ignifuge de résine selon l'une quelconque des revendications précédentes.
